# EUROPEAN PATENT SPECIFICATION

(11) **EP 2 655 870 B1**
(45) Date of publication and mention of the grant of the patent: **12.10.2016**
(21) Application number: 11804761.2
(22) Date of filing: 20.12.2011
(51) Int. Cl.: F03B 13/26, F03B 17/06

(54) **MOUNTING FOR UNDERWATER TURBINE**
HALTERUNG FÜR EINE UNTERWASSERTURBINE
INSTALLATION D'UNE TURBINE SOUS-MARINE

(30) Priority: 23.12.2010 GB 201021858; 27.04.2011 GB 201107010
(43) Date of publication of application: 30.10.2013
(73) Proprietor: Tidalstream Limited, Southam, Warwickshire CV47 0HF (GB)
(72) Inventor: TODMAN, Michael Torr, Warwickshire CV47 2BT (GB); ARMSTRONG, John Richard Carew, London W4 2AF (GB)
(74) Representative: Gray, James
(86) International application number: PCT/GB2011/052529
(87) International publication number: WO 2012/085558

(56) References cited:
- WO-A2-2007/130479
- GB-A- 2 348 249
- GB-A- 2 434 410
- GB-A- 2 441 821
- GB-A- 2 450 624
- GB-A- 2 471 874
- US-A- 6 091 161

## Description

The present invention concerns a mounting for an underwater turbine, and in particular to a buoyant submersible mounting having a variable pitch.

Underwater turbines have been proposed for generation of electricity from tidal streams. Several practical problems hamper the widespread use of such turbines, in particular the means and method of installation, and the means and method of maintenance. It would be preferable to avoid the difficulty and expense of specialized floating cranes and the like. It would also be desirable to avoid the necessity of complex underwater structures, especially fixed structures, so as to facilitate removal at the end of service life.

For some installations it would further be desirable to avoid structures close to the surface, so as to prevent collision damage from ships.

Various mountings for underwater turbines are known from GB 2 409 885 A, GB 2 434 410 A, GB 2 450 624 A, GB 2 441 821 A, and GB 2 348 249 A.

According to the invention there is provided a buoyant submersible mounting for an underwater turbine, according to claim 1.

In a preferred embodiment said second leg comprises a chamber of variable buoyancy. In one embodiment the depending legs define an apex therebetween which in use constitutes the high point of the mounting in use; the legs are orientated downwardly from this apex and substantially oppositely.

Preferably the chamber is adapted to contain a variable volume of water as ballast. In one preferred embodiment said mounting includes a substantially fixed volume of water shared between said legs in accordance with the desired pitch. Alternatively ballast, preferably water, may be vented or admitted to and from the exterior of the chamber, typically by pump. The pump may shift ballast directly, or indirectly by for example increasing air pressure acting on a liquid ballast such as water. A plurality of chambers may be provided.

The second leg is typically shorter than the first, and both legs are preferably substantially straight and substantially in line.

In such an arrangement, the depending legs provide that the centre of gravity is substantially below the centre of buoyancy when substantially submerged, so that the mounting is stable against roll.

A mounting according to the invention is adapted to float at or close to the surface, and to be towed to an installation site where water may be added as ballast to one or both legs to permit the first leg to be attached to an underwater attachment, for example a sea bed anchorage.

Subsequently ballast is adjusted in the second depending leg to place the mounting at the desired operational depth and/or at a desired pitch; such ballast may be transferred from the first depending leg.

In the use condition the mounting is fully submerged, and may float at a distance above the underwater surface, or may sit on the underwater surface.

In the latter case the mounting may be ballasted onto the underwater surface, for example a form-fitting support. In the alternative, a linking device may be provided to draw the mounting toward or onto an underwater anchorage. A latching device may be provided to retain the mounting on the anchorage.

Suitable valves and pumps may be provided to admit water as ballast, and to transfer such ballast between the first and second depending legs.

In embodiments where the mounting is intended to sit on the underwater surface, the ballast/latch arrangements should be sufficient to ensure that the mounting is substantially immovable having regard to changes in water level and current; the mounting should not inadvertently lift from its seat, or bump up and down.

The legs may comprise tubular hollow structures, and in one embodiment are connected at a fixed angle. Alternatively the legs may be movable from a substantially horizontal transport condition, in which the legs are in-line and/or in part parallel, to a deployed condition. In the latter case a suitable connection between the legs is provided, for example a pivot, which can be locked in the deployed condition so that both legs depend in use. The transport condition allows both legs to float substantially on the surface, and thus permit manoeuvring in shallow water.

In certain circumstances for example at slack water, there may be insufficient tidal forces acting on the mounting to ensure stability. For example a floating mounting may bob up and down in an undesirable manner. In an embodiment, the mounting may include a vertical thruster, for example in the form of a vertical axis rotor, to impose a downwards force on the mounting in opposition to the upward buoyancy force. Such a force can stabilize movement of the mounting when desired, and may also assist in urging the mounting toward an underwater seat.

The mounting of the invention further includes an attachment for one or more underwater turbines, and preferably a plurality of turbines are arranged symmetrically on either side of the mounting so as to balance torques exerted on the underwater attachment in use. In a preferred embodiment the second depending leg projects downwardly beyond the tip of the turbine rotor(s) so as to act as a stop on the underwater surface whilst allowing free turbine rotation.

By suitable arrangement of the turbine attachment, the mounting is adapted to be brought to the surface by transferring ballast from the second depending leg, so as to increase buoyancy and to bring the turbine(s) to a surface condition, where maintenance and repair is possible.

Internal transfer of ballast water between the depending legs provides one convenient and progressive way of slowly adjusting the pitch of the mounting so as to move an underwater turbine to and from the deployed condition.

The mounting of the invention may comprise a plurality of first depending legs and/or a plurality of second depending legs, to improve resistance to roll, and to allow the mounting to sit upon the sea bed if desired, using the legs as sole support. Preferably the plurality of depending legs are arranged symmetrically about the stream flow direction, and in a preferred embodiment the mounting is substantially 'V' shaped with the twin first legs joined at an apex to constitute a connection for an underwater attachment, and spaced apart twin second depending legs defining a turbine attachment therebetween.

Where a plurality of legs is provided, arrangements may be included to transfer ballast between the legs in a direction transverse to the stream direction. Such an arrangement may rely upon pumps and valves for water ballast, and utilize one or more pumps associated with fore and aft ballast transfer and one or more chambers associated with such fore and aft transfer. Trimming about the roll axis may be useful, for example, if one of a pair of laterally spaced turbines should fail.

The first depending leg or legs may be attached directly to an underwater anchorage, or tethered thereto, by a flexible link, such as a chain. The underwater anchorage is typically the sea bed or the bed of a tidal river.

The mounting includes a yaw restraint to prevent pivoting about a vertical axis through the underwater anchorage. Such an arrangement is appropriate in river flow or where swinging in tides is not required. The yaw restraint comprises a rigid arm extending from a second anchorage to said first depending leg.

In a preferred embodiment, the secondary anchorage at the upstream side, for example on a line with the primary anchorage which is orthogonal to the stream flow. If restrained against yaw, the turbine may be adapted to generate in opposite stream flow directions, as in tidal flow.

Other features of the invention will be apparent from the following description of a preferred embodiment shown by way of example only in the accompanying drawings in which:-
Fig. 1 illustrates an assembly of a mounting according to the invention, and a plurality of turbines in the operating condition.
Figs. 2-5 illustrate schematically the mounting of the invention in transport, installation, operating and fully submerged conditions.
Figs. 6-7 illustrate a mounting having a forward/upward projection of the trailing leg(s) thereof.
Figs. 8-9 illustrate a mounting having pivotable first and second legs.
Fig. 9a illustrates a rotor sweep pattern of the mounting of Fig. 9 (viewed from the trailing side of the mounting).
Fig. 10 illustrates a 'V' shaped mounting having a yaw restraint.
Fig. 11 illustrates in plan a schematic mounting according to the invention having toe-in to enhance stability.
Fig. 12 corresponds to Fig. 6 and illustrates an alternative trailing leg.

With reference to the drawings an underwater turbine mounting comprises a hollow 'V' shaped twin boom structure (10), of for example steel. The apex (11) constitutes a fixing for direct attachment to an underwater anchorage (12) on the sea bed (13).

The anchorage (12) includes an articulation which permits yaw motion, so that the structure can trail in a tidal stream flow, and pitch so that the structure can adopt a predetermined depth below the water surface (14). The anchorage may further, if desired, restrict roll of the structure by constraining movement about a roll axis passing through the anchorage.

Each boom (15) has the shape of a golf putter, and comprises a long depending portion (16) and a short depending portion (17). The portions typically have an included angle in the range 110°-160°, but the precise angle is selected substantially in accordance with the depth of water in which the mounting is to be placed.

The structure (10) includes an arm linking the booms (15) in the vicinity of the junction between the long and short portions (16, 17), and which is adapted to receive one or more underwater turbines (19). The turbines are responsive to stream flow in the direction of arrow A, to generate electricity in a conventional fashion - electrical output may be via the anchorage and an underwater cable.

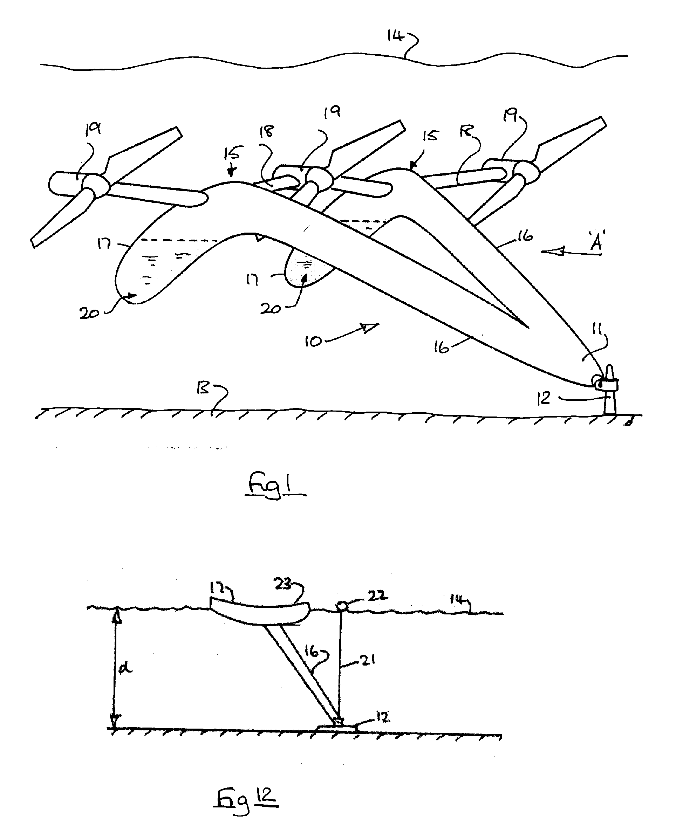

Within the long and short portions (16, 17), one or more hollow chambers are provided whereby the pitch of the structure can be changed. These chambers provide variable buoyancy, and can be ballasted to determine the depth at which the structure finds neutral buoyancy. As illustrated in Fig. 1, the structure is attached to the anchorage (12), and by varying the volume of ballast water (20) in the short portions, the pitch of the structure can be progressively changed to alter the submerged depth.

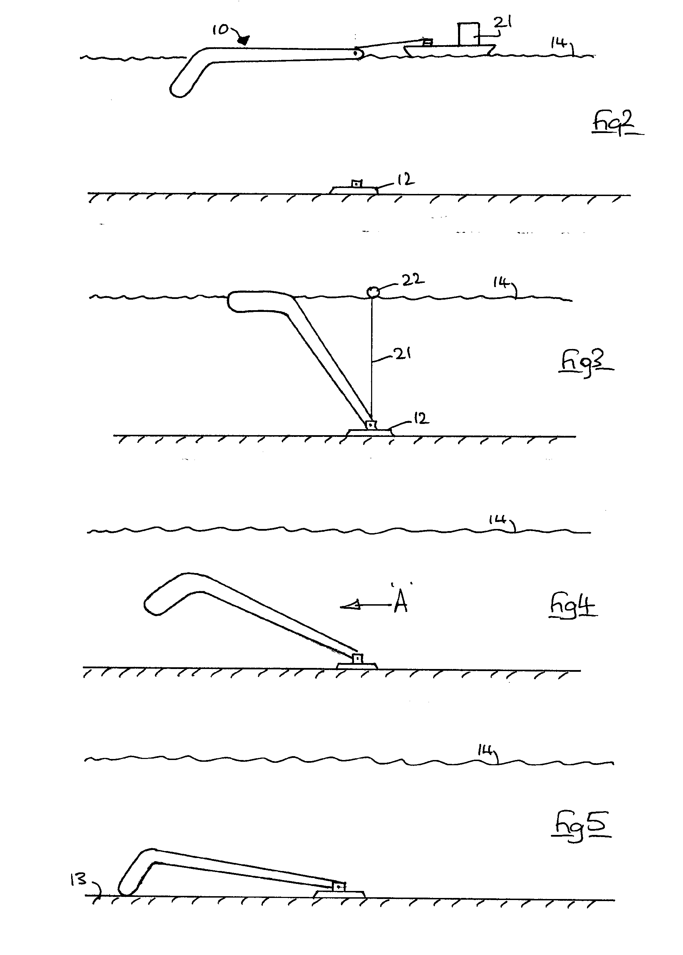

Fig. 2 illustrates a transport condition in which the structure floats upon the surface of the water and can be towed by a tug (21). The long portion (16) is unballasted, and the short portion may be ballasted to aid stability. As will be apparent, the short portions (17) act as a keel. The turbines are not illustrated, so as to improve clarity. They may be part of the towed assembly, or added at the installation site.

Fig. 3 illustrates the installation condition (turbines omitted) in which ballast is added to the long portions (16) and optionally removed from the short portions (17), so that the apex drops to a sea bed anchorage (12). The apex may for example be guided by a cable (21) extending from the anchorage to a buoy (22).

Fig. 4 illustrates an operating condition (turbines omitted) in which the turbines are submerged at a desired depth in the stream flow A. Ballast is transferred to the short portions in a sufficient amount, the apex being secured to the sea bed. Sufficient depth for the passage of shipping over the turbine rotor(s) is assured. Stability is also ensured since the geometry of the structure places the centre of gravity below the centre of buoyancy.

Fig. 5 illustrates the case where the ends of short portions rest on the sea bed (13). This condition may happen from time to time for instance under conditions of extreme flow or fault conditions, or it may be induced deliberately by admitting ballast to the depending leg(s). The ground-engaging ends of the structure may be reinforced or have removable caps to prevent damage by bumping or scraping. A linking device such as one or more flexible cables, may be provided to draw the short portions down when required, and a latch may be provided to retain the mounting against the underwater surface.

In the conditions of Fig. 5, a yaw restraint may be provided, for example at the anchorage, so as to prevent yawing when the stream flow is reversed in direction. In this case, the structure may be deliberately ballasted or the feet affixed to the sea bed to keep the structure in a stable and safe condition, well below the level of shipping passing overhead.

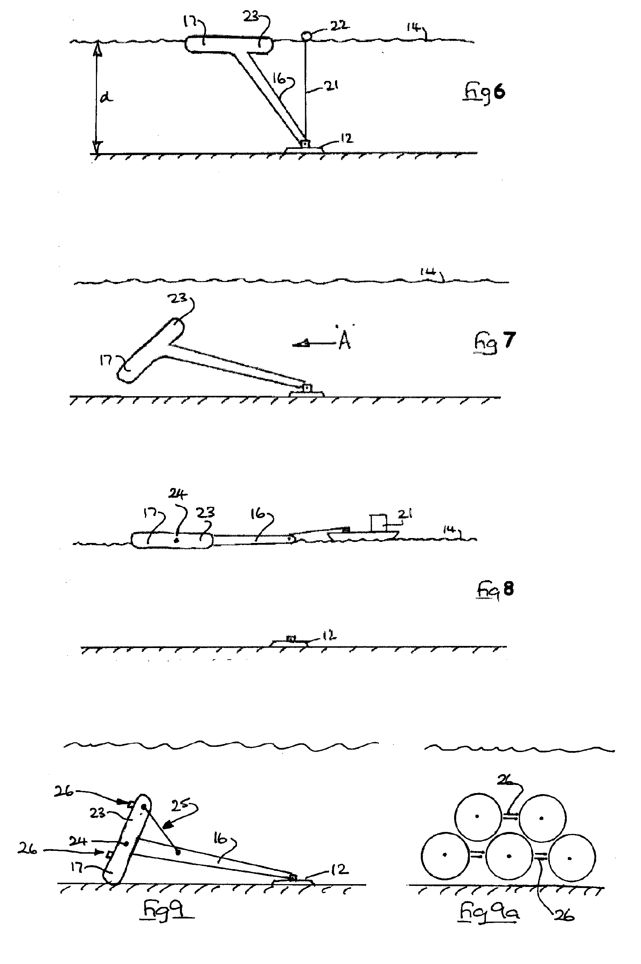

Fig. 6 illustrates an alternative embodiment in which the trailing leg has a forward projection (23) when floating on the surface in the installation condition. This arrangement provides increased buoyancy and increased waterline length for safe stable activities at the surface, for example turbine maintenance. A long waterline confers better sea keeping qualities in stormy weather. As illustrated the forward projection is somewhat shorter than the second leg, and is preferably independent in the sense that the buoyancy thereof is not variable. The nose of the forward projection is aft of the anchorage (Fig. 6), preferably by at least 5% of the depth of water (d).

Fig. 7 shows the mounting of Fig. 6 in the operating condition, the forward projection (23) being of a length to allow safe passage of shipping.

Fig. 8 illustrates an alternative transport condition in which a second leg (17, 23) is attached to the first leg (16) by a pivot (24); the forward projection (23) may be omitted. In use the structure is substantially above the water surface during transport as to permit movement in shallow water, but is moved to the deployed condition of

Fig. 6 and locked when reaching the anchorage (12). The pivot allows reversible deployment so that the structure can be towed back to harbour. During transport the structure is substantially a common plane so as to have a long waterline length.

Fig. 12 corresponds to Fig. 6, and shows an alternative non-straight trailing leg, having a forward projection. In the surface condition, the ends of the leg curve upwardly to give the leg a banana shape.

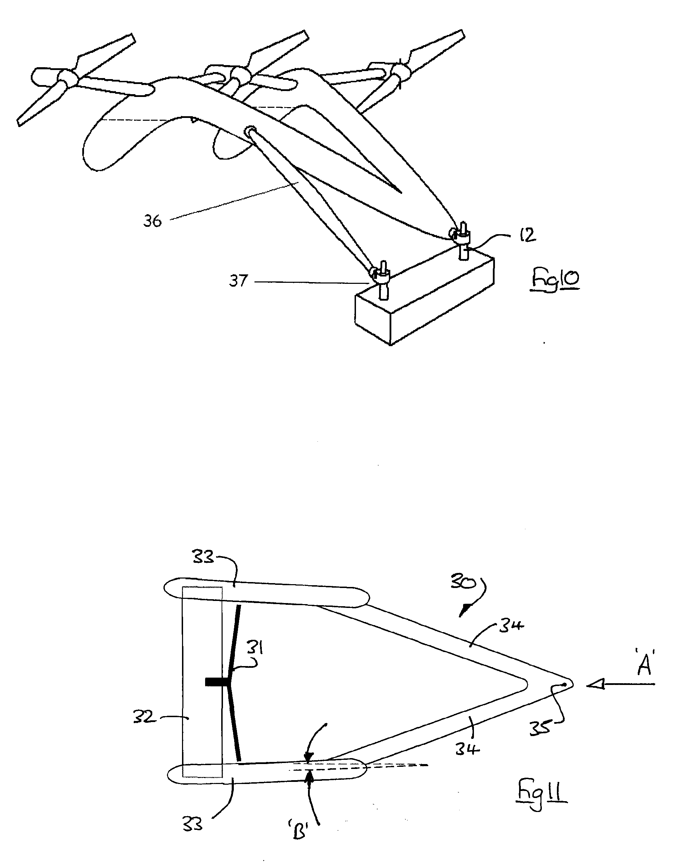

Fig. 10 illustrates an arrangement substantially as shown in Fig. 1 but including a yaw restraint (36) extending between one of the first legs (16) and a secondary anchorage (37). The yaw restraint substantially or wholly prevents yaw, but allows variation of pitch, for example by a suitable bearing at the anchorage (37). A single rigid yaw restraint, as illustrated, can operate to resist both tensile and compressive forces. The anchorages (12, 37) are illustrated on a common base, but separate bases are of course possible. When fixed against yaw, the turbines are preferably operable in opposite directions of stream flow.

To further increase stability when fixed against yaw, the mounting may be ballasted to sit on the sea bed in use as shown in Fig. 9, or may be anchored to the sea bed at the lower end(s) of the second leg(s). Suitable sea bed anchorages or seats may be provided, and for example cables to permit the second legs to be winched down to the use condition. In this configuration it will be appreciated nevertheless that the variable buoyancy of the structure can be used to raise the turbines to the surface for maintenance and replacement. Power generation when sitting on the sea bed is envisaged.

A brace (25) may be connected between the first and second legs, as illustrated to maintain the relative angle in the deployed condition.

Where plural second legs are provided, they may be linked at more than one location so as to add structural rigidity, and provide multiple mounting locations for turbines. For example such cross arms (26) may be provided at the trailing edge (Fig. 9), so as to allow movement to and from the transport condition, and provide for turbines mounted in a vertical array. Thus one or more turbines may be arranged substantially horizontally on a first arm (26), and one or more further turbines arranged substantially horizontally on the second arm (26). The turbines may be staggered so as to give a rotor sweep pattern of low overall height, as illustrated in Fig. 9a, so as to maintain a clearance suitable for safe passage of shipping.

Fig. 11 shows in plan a 'V' shaped mounting (30) of the form illustrated in Fig. 1, and having a single turbine rotor (31) mounted on a hydrofoil (32) which passes between twin depending short portions (33). The long portions (34) face into the stream flow A, and are joined at an apex (35) for attachment to an anchorage (not shown).

As illustrated the short portions (33) comprise streamlined casings which toe-in in the direction facing the stream flow so as to enhance directional stability when trailing the anchorage. The toe-in angle of one boom is represented by angle 'B', which lies in the range 0.5 - 10 degrees.

The second legs of Figs. 6-8 may also toe-in relative to the flow direction in order to enhance directional stability. If on the sea bed in use, toe-in has no benefit and the second legs can be substantially parallel.

It will be appreciated that for maintenance, the structure of the invention may be moved to the position of Fig. 3, in which the turbines are at the surface (14) or just above the surface (14), so as to provide access from a conventional service vessel. The structure includes ballast tanks, valves and pumps of sufficient capacity to ensure controlled progressive movement between the conditions illustrated in Figs. 2-5. Pumping of ballast water is a well understood technique, and the arrangement provides a safe and convenient method of deploying and removing an underwater turbine to and from an operating site.

The mounting of the invention is suitable for installation at sea to generate power from the tides, fresh water locations in rivers and tidal estuaries where stream flow is sufficient.

## Claims

1. A buoyant submersible mounting for an underwater turbine (19), said mounting having a first depending leg (16) for connection to an underwater anchorage (12), and a second depending leg (17) trailing said first leg (16) in use, wherein the second depending leg (17) is adapted for variable buoyancy whereby the pitch of the mounting may be adjusted in use, wherein the mounting further includes a principal underwater anchorage (12) to which the first depending leg (16) is directly attached, said principal anchorage (12) being adapted to permit movement of said mounting in pitch and roll, said mounting further including a second underwater anchorage (37) transversely spaced from said principal anchorage (12), **characterised in that** said mounting further comprises a yaw restraint comprising a rigid arm (36) extending from said second anchorage (37) to said first depending leg (16) to provide a yaw restraint for the mounting.

2. A mounting according to claim 1, and adapted to variable ballast by having one or more chambers adapted to contain a variable volume of water.

3. A mounting according to claim 2, and adapted to transferrable ballast.

4. A mounting according to claim 2 or claim 3, wherein a chamber is provided in or by said second leg (17).

5. A mounting according to claim 4, and further including a chamber provided in or by said first leg (16).

6. A mounting according to claim 5, wherein a chamber of the first leg (16) is in fluid connection with a chamber of the second leg (17), a pump being provided to transfer water between chambers of the first and second leg (16,17).

7. A mounting according to any preceding claim, and further including a pump to admit and exhaust water from a chamber to the exterior of said mounting.

8. A mounting according to any preceding claim, wherein said second leg (17) is substantially straight, and extends fore and aft of a connection to said first leg (16), said first and second legs (16,17) lying in a substantially common plane which is vertical, in use.

9. A mounting according to any preceding claim, and further including a pivot (24) between said first and second legs (16, 17) so as to permit said legs to be substantially in-line for transport purposes when not in use, said mounting further including a latch (25) to retain said legs at an angle in use.

10. A mounting according to any preceding claim, and comprising plural first and second legs (16, 17), said first legs meeting at a common apex (11) for attachment to the anchorage (12).

11. A mounting according to claim 10, wherein said first legs (16) diverge from said apex (11), and said mounting further includes an arm linking respective first and/or second legs (16,17), wherein said arm defines a turbine attachment.

12. A mounting according to claim 11, wherein said arm comprises a hydrodynamic wing.

13. A mounting according to any of claims 10-12, and further including one or more turbines (19), said second legs (17) being configured to contact the underwater ground surface (13) before the blades of said one or more turbines (19).

14. A mounting according to any of claims 10-13, wherein said second legs (17) are adapted to be fixed on the underwater ground surface (13) in use.

## Patentansprüche

1. Auftriebsfähige tauchbare Halterung für eine Unterwasserturbine (19), wobei die Halterung im Gebrauchszustand eine erste herabhängende Strebe (16) zur Verbindung mit einer Unterwasserverankerung (12) und eine zweite herabhängende Strebe (17) am Ende der ersten Strebe (16) aufweist, wobei die zweite herabhängende Strebe (17) zu einem variablen Auftrieb in der Lage ist, wodurch die Neigung der Halterung während des Gebrauchszustands eingestellt werden kann, wobei die Halterung ferner eine Haupt-Unterwasserverankerung (12) aufweist, an der die erste herabhängende Strebe (16) direkt befestigt ist, wobei die Hauptverankerung (12) in der Lage ist, eine Nick- und Roll-Bewegung der Halterung zuzulassen, wobei die Halterung ferner eine zweite Unterwasserverankerung (37) aufweist, die mit Querabstand von der Hauptverankerung (12) angeordnet ist, **dadurch gekennzeichnet, dass** die Halterung ferner mit einer Gier-Beschränkung versehen ist, die einen starren Arm (36) aufweist, der sich von der zweiten Verankerung (37) zu der ersten herabhängenden Strebe (16) erstreckt, um ein Gieren der Halterung zu beschränken.

2. Halterung nach Anspruch 1, ferner ausgebildet zur variablen Ballastierung, indem sie eine oder mehrere Kammern aufweist, die ein variables Volumen an Wasser aufnehmen können.

3. Halterung nach Anspruch 2, ferner ausgebildet zur übertragbaren Ballastierung.

4. Halterung nach Anspruch 2 oder Anspruch 3, bei der eine Kammer in oder nahe der zweiten Strebe (17) vorgesehen ist.

5. Halterung nach Anspruch 4, ferner mit einer in oder nahe der ersten Strebe (16) vorgesehenen Kammer.

6. Halterung nach Anspruch 5, bei der eine Kammer der ersten Strebe (16) in Fluidverbindung mit einer Kammer der zweiten Strebe (17) steht, wobei eine Pumpe vorgesehen ist, um Wasser zwischen Kammern der ersten und der zweiten Strebe (16,17) zu übertragen.

7. Halterung nach einem der vorhergehenden Ansprüche, und ferner mit einer Pumpe zum Zulassen oder Ausstoßen von Wasser aus der Kammer nach außerhalb der Halterung hin.

8. Halterung nach einem der vorhergehenden Ansprüche, bei der die zweite Strebe (17) im Wesentlichen geradlinig ist und vor und hinter einer Verbindung mit der ersten Strebe (16) verläuft, wobei die ersten und zweiten Streben (16,17) im Gebrauchszustand im Wesentlichen in einer gleichen Ebene liegen, die vertikal verläuft.

9. Halterung nach einem der vorhergehenden Ansprüche, und ferner mit einem Gelenk (24) zwischen den ersten und zweiten Streben (16,17), um im Nicht-Gebrauchszustand eine im Wesentlichen in Linie verlaufende Anordnung der Streben für Transportzwecke zu ermöglichen, wobei die Halterung ferner eine Verriegelungsvorrichtung (25) aufweist, um die Streben im Gebrauchszustand unter einem Winkel ausgerichtet zu halten.

10. Halterung nach einem der vorhergehenden Ansprüche, und mit mehreren ersten und zweiten Streben (16,17), wobei die ersten Streben zur Befestigung an der Verankerung (12) an einem gemeinsamen Apex (11) aufeinandertreffen.

11. Halterung nach Anspruch 10, bei der die ersten Streben (16) von dem Apex (11) divergieren, und die Halterung ferner eine Arm zum Anlenken jeweiliger erster und zweiter Streben (16,17) aufweist, wobei der Arm eine Turbinenbefestigung bildet.

12. Halterung nach Anspruch 11, bei der der Arm einen hydrodynamischen Flügel aufweist.

13. Halterung nach einem der Ansprüche 10-12, und ferner mit einer oder mehreren Turbinen (19), wobei die zweiten Streben (17) derart konfiguriert sind, dass sie den Unterwasserboden (13) vor den Flügeln der einen oder der mehreren Turbinen (19) kontaktieren.

14. Halterung nach einem der Ansprüche 10-13, bei der die zweiten Streben (17) im Gebrauchszustand am Unterwasserboden (13) befestigbar sind.

## Revendications

1. Montage submersible flottant pour une turbine sous-marine (19), ledit montage présentant une première branche dépendante (16) pour la connexion avec un ancrage sous-marin (12) et une seconde branche dépendante (17) qui suit ladite première branche (16) lors de l'utilisation, dans lequel la seconde branche dépendante (17) est apte à présenter une flottabilité variable de sorte à ce que le tangage du montage puisse être ajusté en utilisation, dans lequel
le montage comporte en outre un ancrage sous-marin principal (12) auquel la première branche dépendante (16) est directement attachée, ledit ancrage principal (12) étant adapté pour permettre un mouvement dudit montage en tangage et roulis, ledit montage comportant en outre un second ancrage sous-marin (37) espacé transversalement dudit ancrage principal (12),
**caractérisé en ce que** ledit montage comprend en outre une retenue de lacet comprenant un bras rigide (36) s'étendant depuis le second ancrage (37) jusqu'à ladite première branche dépendante (16) pour fournir une retenue de lacet au montage.

2. Montage selon la revendication 1, adapté pour un ballast variable en comportant une ou plusieurs chambres adaptées pour contenir un volume d'eau variable.

3. Montage selon la revendication 2, adapté pour un ballast transférable.

4. Montage selon la revendication 2 ou 3, dans lequel une chambre est prévue dans ou par ladite seconde branche (17).

5. Montage selon la revendication 4 et comportant en outre une chambre prévue dans ou par ladite première branche (16).

6. Montage selon la revendication 5, dans lequel une chambre de la première branche (16) est en connexion fluidique avec une chambre de la seconde branche (17), une pompe étant prévue pour transférer de l'eau entre des chambres des première et seconde branches (16, 17).

7. Montage selon l'une quelconque des revendications précédentes et comportant en outre une pompe pour admettre et évacuer de l'eau d'une chambre vers l'extérieur dudit montage.

8. Montage selon l'une quelconque des revendications précédentes, dans lequel ladite seconde branche (17) est sensiblement droite et s'étend à l'avant et l'arrière d'une connexion avec ladite première branche (16), lesdites première et seconde branches (16, 17) se trouvant dans un plan sensiblement commun qui est vertical lors de l'utilisation.

9. Montage selon l'une quelconque des revendications précédentes et comportant en outre un pivot (24) entre lesdites première et seconde branches (16, 17) de sorte à permettre auxdites branches d'être sensiblement alignée pour des fins de transport en l'absence d'utilisation, ledit montage comportant en outre un loquet (25) pour retenir lesdites branches selon un angle en utilisation.

10. Montage selon l'une quelconque des revendications précédentes et comprenant plusieurs première et seconde branches (16, 17), lesdites premières branches se rencontrant sur un sommet commun (11) pour l'attache à l'ancrage (12).

11. Montage selon la revendication 10, dans lequel lesdites premières branches (16) divergent dudit sommet (11) et ledit montage comporte en outre un bras reliant des premières et/ou secondes branches respectives (16, 17), dans lequel ledit bras définit une attache de turbine.

12. Montage selon la revendication 11, dans lequel ledit bras comprend une aile hydrodynamique.

13. Montage selon l'une quelconque des revendications 10 à 12 et comportant en outre une ou plusieurs turbines (19), lesdites secondes branches (17) étant configurées pour entrer en contact avec la surface au sol sous-marin (13) avant les pales desdites une ou plusieurs turbines (19).

14. Montage selon l'une quelconque des revendications 10 à 13, dans lequel lesdites secondes branches (17) sont adaptées pour être fixées sur la surface au sol sous-marin (13) en utilisation.
